# EUROPEAN PATENT SPECIFICATION

(11) **EP 1 040 602 B1**
(45) Date of publication and mention of the grant of the patent: **02.07.2003**
(21) Application number: 98942332.2
(22) Date of filing: 01.09.1998
(51) Int. Cl.: H04B 7/26, H04M 1/72

(54) **MULTI-LINE WIRELESS TELEPHONE SYSTEM COMPUTER INTERFACE**
COMPUTERSCHNITTSTELLE FÜR DRAHTLOSE MEHRKANALTELEFONANORDNUNG
INTERFACE D'ORDINATEUR POUR RESEAU DE TELEPHONIE MULTILIGNE SANS FIL

(30) Priority: 12.12.1997 US 69568 P
(43) Date of publication of application: 04.10.2000
(73) Proprietor: THOMSON CONSUMER ELECTRONICS, INC., Indianapolis, IN 46290-1024 (US)
(72) Inventor: KNUTSON, Paul, Gothard, Indianapolis, IN 46219 (US); RAMASWAMY, Kumar, Indianapolis, IN 46240 (US); SEEFELDT, David, Frederick, Lebanon, IN 46052 (US); STEPHENSON, Harry, Victor, Carmel, IN 46032 (US); PETERSON, Eric, Carl, Noblesville, IN 46060 (US)
(74) Representative: Kohrs, Martin
(86) International application number: US9818088
(87) International publication number: WO99031826

(56) References cited:
- EP-A- 0 399 611
- EP-A- 0 593 118
- WO-A-98/39941
- PATENT ABSTRACTS OF JAPAN vol. 098, no. 002, 30 January 1998 & JP 09 284380 A (SONY CORP), 31 October 1997

## Description

### BACKGROUND OF THE INVENTION

### Field of the Invention

The present invention relates to multi-line wireless telephone systems and, in particular, to interfacing between a computer and a time-division multiplexed (TDM) wireless telephone system.

### Description of the Related Art

The use of telephones and telephone systems, including wireless telephone systems, is widespread. In wireless telephone systems, a wireless (cordless) telephone handset unit communicates via either analog or digital modulated radio frequency (RF) signals with a base unit, which is typically connected via one or more standard telephone lines to an external telephone network. In this manner, a user may employ the wireless handset to engage in a telephone call with another, external, user through the base unit and the telephone network.

Multi-line wireless telephone systems are in use in various situations, such as businesses with many telephone users. Such systems employ a handset that communicates with up to N handsets simultaneously, typically with digital communications schemes, such as a spread-spectrum, time division multiple access (TDMA). In a TDMA system, a single RF channel is used, and each handset transmits and receives data during a dedicated time slice or slot within a n overall cycle or epoch. It is desirable to provide various features, such as private branch exchange (PBX) features and capabilities, in a multi-line wireless telephone system.

However, it may be difficult to set up such systems, and to control or access the data within the system. For example, it may be difficult, cumbersome, or impossible to set up or change call routing as desired. This can be especially true in wireless phone systems that do not include sophisticated user interface and user-programmability, and associated peripherals, processors, architecture, and the like. See, e.g., European Pat. App. No. EP-A-0 399 611 (Philips Electronics UK Limited), published 28,11,90, for an exemplary wireless phone system. Such wireless system typically do not contains such features as they are often designed to be relatively inexpensive. These limitations can impair the utility of wireless telephone systems.

Patent Abstracts of Japan, vol. 098, no. 002, 30 January 1998 & JP 09 284380 A (Sony Corp.), 31 October 19979, discloses a telephone terminal, information service device, destination information registration system, and destination information registration method in which a portable telephone sends an acquired telephone number to a base unit, and the base unit sends the received telephone number to a personal computer via a communication interface. European Pat. App. No. EP-A-0 399 611 (Philips Electronics UK Limited), published 28.11.90, discloses a communications system for data transmission over a time-division duplex frequency channel.

### SUMMARY

A wireless telephone system comprises one or more wireless handsets and a base unit. Each handset has a handset transceiver. The base unit has a base transceiver for communicating over an RF channel with each handset via its handset transceiver. The base transceiver also includes an interface for interfacing with an external computer, wherein the computer, when interfaced with the base unit via the interface, can control the operation of the wireless telephone system.

### BRIEF DESCRIPTION OF THE DRAWINGS

Fig. 1 is a block diagram of TDMA multi-line wireless telephone system, in accordance with an embodiment of the present invention;
Fig. 2 is a schematic representation of the architecture of the base station of the system of Fig. 1, in accordance with an embodiment of the present invention; and
Fig. 3 is a flow diagram illustrating the data flow of a telephone call combiner operation implemented by the base station of the system of Fig. 1, in accordance with an embodiment of the present invention.

### DESCRIPTION OF THE PREFERRED EMBODIMENT

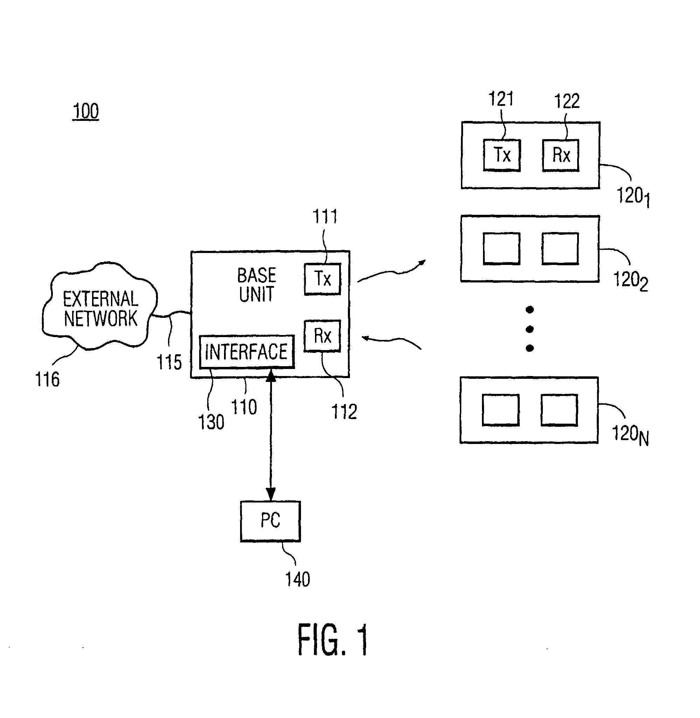

Referring now to Fig. 1, there is shown a block diagram of spread spectrum TDMA multi-line digital wireless telephone system 100, in accordance with an embodiment of the present invention. TDMA system 100 comprises a base unit 110, which has receiver and transmitter units 112 and 111, respectively, and is coupled to external telephone network 116 via telephone line(s) 115. Base unit 110 also comprises interface 130, for providing interfacing between base unit 110 and an external computer such as personal computer (PC) 140.

System 100 also comprises N wireless handsets 120₁, 120₂, ... 120_{N}. Each has a transmitter and receiver unit (transceiver), such as transmitter 121 and receiver 122 of handset 120₁. In one embodiment, receiver unit 112 comprises N logical receivers, and transmitter unit 111 comprises N logical transmitters, so that receiver and transmitter units 112 and 111 provide N logical transceiver units, one for each of N wireless handsets. At any given time, M handsets (0 ≤ M ≤ N) are operating or "off hook" (i.e., in the process of conducting a telephone call).

The telephone system provided by system 100 preferably operates in the 900 MHz unlicensed band, and preferably provides features like that of a small PBX, in conjunction with PC 140. In one embodiment, system 100 employs a combination of time division multiplexing (TDM), such as TDMA, and frequency band selection, to overcome interfering sources and to maintain reliable links between the base unit and the handsets. In a digital TDMA scheme, each handset only transmits or receives data during its own "time slice" or slot allocated uniquely to it in the TDMA epoch. System 100 thus provides a wireless TDM network between the base station 110 and each handset 120ᵢ (1 ≤ i ≤ N).

As explained above, it may be difficult to set up such telephone systems, and to control or access the data within the system. For example, it may be prohibitively expensive to provide programmable configuration abilities into a base unit, or to provide an extensive set of input and output devices beyond the simple numeric keypads of the handsets and base unit. The present invention provides an interface to allow a telephone system, such as the telephone system comprising base unit 110 and handsets 120ᵢ, to be coupled to an external computer, such as PC 140, to facilitate control and use of the telephone system. PC 140 itself is a sophisticated programmable device with adequate input and output devices (e.g., keyboard and mouse, monitor) to allow a user to have a great amount of control over the operations of telephone system 100.

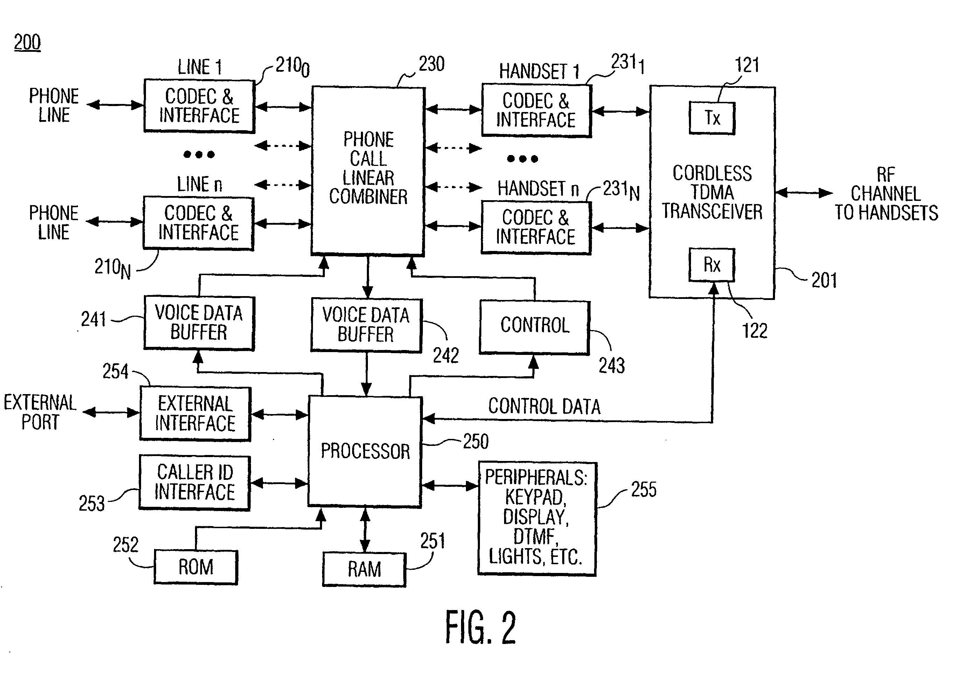

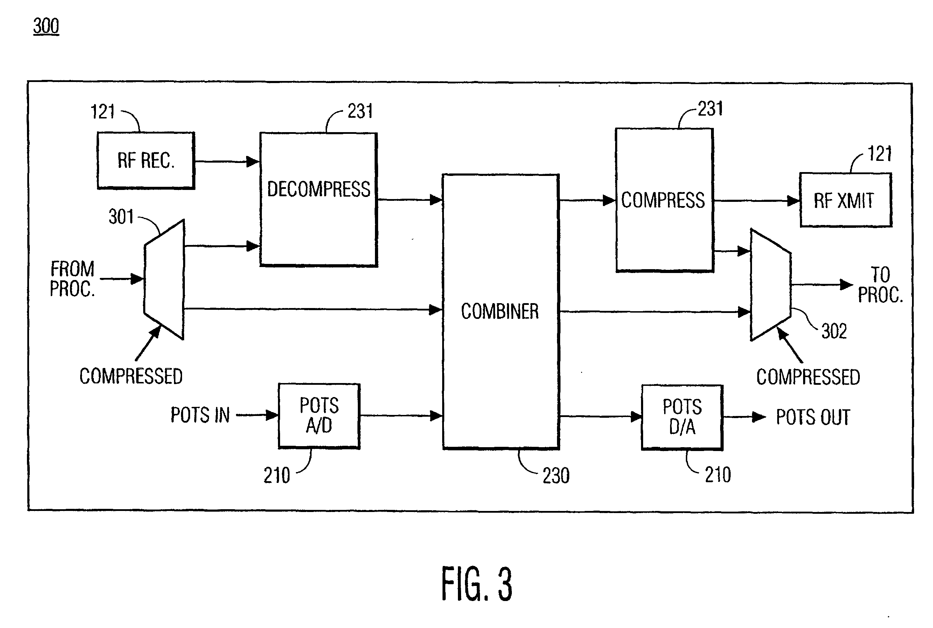

For example, by using PC 140, the user may more easily set up, operate, and control telephone system 100, record data from selected data flows within system 100, route and selectively combine telephone calls and lines, provide various functions such as voice mail (including storage of voice mail messages and caller ID data), conference calling, caller ID functions and caller ID-based call routing and screening, data computational-intensive operations, such as audio or other data compression or decompression, and the like, as described in further detail below with reference to Figs. 2 and 3. In general, the ability of external PC 140 to set up, operate, and control telephone system 100, and to provide the various features and functions described herein, may be referred to as controlling the operation of the wireless telephone system.

In the present invention, the duty to perform certain tasks (e.g., non-real time tasks such as voice mail message storage) is shifted into PC 140 for storage efficiency and to minimize the memory and hardware requirements in telephone system 100. Embedding the various applications performable by PC 140 via interface 130 in base unit 110 would require memory, protocol, and other resources that may be too complex or expensive for a mere telephone system, as such systems are often designed to be relatively inexpensive. The present invention allows a relatively inexpensive digital wireless telephone system to be employed, having only the interface specified herein but not having all of the additional features, components, and functionality necessary to allow for user control of the operation of the telephone system, by providing these features from a PC coupled to the telephone system via the interface, and running relatively inexpensive software applications to provide these capabilities.

Referring now to Fig. 2, there is shown a schematic representation of the interface architecture 200 of the interface 130 of base station 110 of the telephone system of Fig. 1, in accordance with an embodiment of the present invention. Interface architecture 200 allows interfacing between PC 140 and base unit 110, to provide a plurality of useful functions and features, described in further detail below. Architecture 200 comprises transceiver 201 (which comprises transmitter 121 and receiver 122); codec & interfaces 231ₗ-231_{N}, one for each of handsets 120ₗ-120_{N}; phone call linear combiner 230, codec & interfaces 210ₗ-210_{N}, each coupled to and for one of N external phone lines; voice data buffers 241, 242; control unit 243; embedded computer processor 250; ROM 252; RAM 251; peripherals 255, such as keypad, display, DTMF (dual tone multi-frequency) keys (i.e., keys 0-9, # and *, the symbols used in dialing), lights, and the like; caller ID interface 253; and external interface 254, which is coupled to a n external computer port for coupling to PC 140. External interface 254 may be a standard port such as a RS-232, ethernet, or universal serial bus-compatible interface, sufficient to provide a computer interface port.

Codec & interfaces 231ₗ-231_{N} convert linear PCM (pulse code modulated) signals from combiner 230 into compressed format for transmission by transmitter 121 of transceiver 201, and convert compressed signals received from receiver 122 of transceiver 201 back into linear PCM signals to feed to combiner 230. Transceiver 201 takes compressed audio data from codecs 231 encodes this data a for protection against RF channel errors, buffers the data until the appropriate time slot for the handset for which the data is destined, and transmits the data, with transmitter 121, at the time slot. Transceiver 201 also receives data from handsets during their respective time slots, decodes channel coding for this data, and transmits compressed data to codecs 231 for decompression.

Phone call linear combiner 230 performs functions such as: routing calls from external phone lines to handsets or to processor 250; providing intercom functions; connecting handsets to the processor to retrieve voicemail; and merging multiple handsets and/or phone lines to make conference calls. Codec & interfaces 210ₗ-210_{N} convert analog POTS (plain old telephone service) signal to digital, and may contain a line echo cancellation function. Voice data buffer 241 allows the processor 250 to send voice signals to combiner 230, which may then be routed to one or more handsets, as in the case of voice mail messages. In a multi-handset system such as system 100, multiple messages for several handsets can be conveyed from processor 250 to combiner 230 via buffer 241. Thus, for example, voice mail messages can be retrieved from RAM 251 or from an external storage device associated with PC 140 via external interface 254. Similarly, voice data buffer 242 allows processor 250 to receive voice signals from combiner 230, such as receiving a message from a phone line and recording it. The recording may be stored in RAM 251, or transmitted across external interface 254 to an external storage device associated with PC 140. Control unit 243 controls combiner 230 and is used to set up combiner 230 to connect calls from phone lines to specified handsets or voice buffers 241, 242.

Embedded computer processor 250 controls system 100, such as transfers of data between interface and RAM 251, and the like. ROM 252 stores the program for processor 250 and all factory setups. RAM 251 stores operating information, temporary variables, and user configurations, and buffers data. RAM 251 may be backed up by a battery. Peripherals 255 handle I/O from base unit 110. For example, peripherals 255 indicate activity to the user (e.g., which lines are in use may be indicated by LEDs), and allow the user to set up the base unit 110 by using the base keypad/display functions of peripherals 255. Caller ID interface 253 may be implemented as an interface to external caller ID modem ICs, or can be an internal modem in hardware or software. Caller ID interface 253 interprets the signals from the call office indicating who originated the call, and makes this information available to processor 250 for indicating on a display of the handset or base, and/or logging in memory 251 or in PC 140 using interface 254. This allows important numbers to be given priority, for example ringing all handsets for high-priority incoming calls, instead of transferring to voice mail if there is no answer on a given handset. External interface 254 allows processor 250 to exchange data with an external computer such as PC 140.

Interface 130 in Fig. 1 is physically represented by external interface 254 of architecture 200, with software support by processor 250 and other functional support provided by the functional elements of architecture 200. Interface 130 thus provides a means for passing various types of data to and from PC 140 via the external computer port and, in particular, provides a means for allowing PC 140 to control and access internal data flows and other aspects of phone system 100. For example, some applications running on PC 140 may be designed to do something with data provided by telephone system 100, such as a voice mail application that can store messages on a storage device of the PC. Such applications need to be able to retrieve from and transmit to system 100 selected audio data. When such an application requires audio data, it needs to be able to read audio data from voice data buffers 241, 242, into the phone call linear combiner 230, and sum data into the ports of the phone call linear combiner 230, which combines and mixes calls. On the other hand, non-audio data transactions, such as those dealing with caller ID messages received from external phone lines, and configuration data used to configure or set up system 100, would not require voice data buffers 241, 242.

Embedded processor 250, in one embodiment, is sufficiently powerful to be able to move data around in real time. For example, processor 250 may provide voice mail by recording a voice message for a missed call, as well as the line number on which the call arrived, and optionally any caller ID data about the call. (For more computational-intensive operations, such as audio compression or decompression, one or more processors of PC 140 may be used to provide a hardware assist to processor 250.) A voice mail function, for example, requires that processor 250 capture audio samples in real time from voice data buffer 242 (about 8,000 samples/second). These captured samples are then stored in RAM 251 within the system; or externally, in PC 140, via interface 254. Later, when the handset summons (requests) the stored voice mail message, processor 250 looks up the message in memory (or receives the data from PC 140 via interface 254), plays it back and presents identifying information (e.g., caller ID information) to the handset.

Voice data buffers 241, 242 serve as the interface between phone call linear combiner 230 and embedded processor 250/external interface 254. This allows data to be provided directly to the processor. Phone call linear combiner 230 may be used to combine telephone call data for various purposes, such as conference calling, under the control of PC 140. Thus, architecture 200 provides an interface that allows PC 140 to selectively combine telephone calls.

Interface architecture 200 provides a number of additional features and advantages as well, including storage of call logs in PC 140; voice mail services in PC 140 (e.g., where PC 140 stores an outgoing message as well as all incoming messages); backing up key system parameters, such as caller ID names; and allowing a VIP list which will open lines via caller ID information by VIP users, such as customers.

Interface architecture 200 also provides a means to perform installation/set up/backup functions by PC 140. For example, such a functionality allows a user to quickly set up the desired features for each handset of the phone system. As an example, a graphical interface on PC 140 may indicate the lines and handsets of system 100, and the human user of PC 140 may set up or configure the system by clicking on various line and handset representations on the screen. The user may indicate which is the main line, and which are the rollover lines. (The main line receives first calls, and when more than one call comes in, the extra calls come in on a sequence of the other, rollover, lines.) The user may also set up the extension numbers of the handsets, and indicate which handset will be in secretary mode. A secretary phone may be used to display more caller ID information than a normal handset display allows. For example, a secretary computer screen may have a list of caller ID of all lines in the system. The user may also set up the outgoing voice mail messages.

A user may also add or delete handsets from telephone system, or add/enable/disable features to the phone system protocols. The present invention also allows the user to back up the configuration of the phone system in preparation for the unlikely event that the current configuration would require restoration, b y storing the current configuration data in a storage device of PC 140. Further, the user is enabled to install a system software upgrade through PC 140. PC 140 can be configured to provide to a user, from PC 140, various operational services, such as caller ID name table lookup; call logging; voice mail; VIP services (in which, e.g., if key caller ID numbers come in, make sure they are answered); telemarketing services; and call routing services.

While it is often desirable to set up features in a computer-free mode, the installation application software could simplify the setup process for many users. Plus, given a reasonable bandwidth port, additional features may be added to the system, in alternative embodiments. For example, one could use a bus such as the universal serial bus to connect multiple base stations together, under the control of PC 140, to add functionality such as an increase in overall system size. In this case, an additional digital port is provided, to allow for system expansion by allowing base station 110 to interface with multiple other base stations.

The external port coupled to external interface 254 has a bandwidth sufficient to support whichever PC-based features are provided. If PC 140 is used solely for relatively low-bandwidth tasks such as simple initialization and backup of features, an RS-232 port is sufficient. On the other hand, a much higher bandwidth port, such as an Ethernet adapter, is preferably used, for coupling to a local area network (LAN), when two spatially separated base stations are coupled together. Therefore, in one embodiment, a compromise approach is preferable in which a medium bandwidth interface is utilized, such as the universal serial bus (USB), to couple base unit 110 to local PC 140 near the base station. Such a medium bandwidth interface is also sufficient to provide network access or storage and monitoring capabilities, as well as basic setup functions.

Table 1 below shows bandwidth requirements and suitable interfaces for various applications, although those skilled in the art will understand that other suitable interfaces may also be used other than those listed in Table 1.

**Table 1:**

| **Application/Bandwidth Tradeoffs** | | | |
|---|---|---|---|
| **Application** | **Resources** | **Bandwidth** | **Interface** |
| Answering Machine | audio, data | >32Kbps/channel | USB, ethernet |
| Call Logging | data | <1 Kbps | USB, RS-232, ethernet |
| Expansion to additional Base | audio, data | >32Kbps/channel | USB, ethernet |
| Network Expansion | audio, data | >32Kbps/channel | USB to PC, ethernet |
| Internet Phone | audio, data | >32Kbps/channel | USB, ethernet |
| Telemarketing Assistant | audio, data | >32Kbps/channel | USB, ethernet |
| Software Upgrades | data | ∼10KBps | USB, RS-232, ethernet |
| Setup, save and restore features | data | ∼1Kbps | USB, RS-232, ethernet |
| Caller ID Table Check | data | ∼1KBps | USB, RS-232, ethernet |

Referring now to Fig. 3, there is shown a flow diagram illustrating the data flow 300 of a telephone call combiner operation implemented by the base station of the system of Fig. 1, in accordance with an embodiment of the present invention, utilizing phone call linear combiner 230 and under the control of PC 140. Data flow 300 illustrates merging of two audio streams (e.g., two phone calls) for conferencing purposes. Combiner 230 operates on decompressed, linear PCM data. Data is received in compressed format over the RF channel from the handsets, to save bandwidth, and thus must be decompressed before being applied to combiner 230. The compressed data may be, for example, in adaptive differential pulse code modulation (ADPCM) format. Thus, for example, an RF signal is received by receiver 121 from a handset, to provide an ADPCM signal, and then decompressed by codec 231, to provide a linear PCM signal. A second signal may be provided, also in compressed form (e.g., to save memory), by processor 250 (or from a processor of PC 140), to the decompression of codec 231 via MUX 301. This may be a signal retrieved from memory, that is to be combined with the handset audio signal, or another handset signal that after being processed by processor 250. Combiner 230 can then combine two or more of the signals from the handset, from processor 250, or from an external telephone line (POTS A/D line, via codec 210). The combined or merged signal is then transmitted out to the appropriate recipients. Alternatively, all audio signals could be transmitted via interface 254 to PC 140, for combining, or for compression and decompression.

One skilled in the art will recognize that the wireless system described above according to the principles of the invention may be a cellular system where base unit 110 represents a base station serving one of the cells in a cellular telephone network.

## Claims

1. A wireless telephone system (100), comprising:
(a) a plurality of wireless handsets (120), each handset (120) comprising a handset transceiver (121, 122); and
(b) a base unit (110) comprising a base transceiver (111, 112) for communicating over an RF channel with each handset via its handset transceiver; and an interface (130) for interfacing with an external computer (140), **characterized in that** said interface comprises: a processor (250), and a phone call linear combiner (230) for selectively routing and teleconferencing telephone calls in the system under the control of the processor in accordance with a system configuration, said computer (140) communicating with the processor to change the system configuration for selected routing and teleconferencing telephone calls in the system, wherein the computer, when interfaced with the base unit via the interface, can communicate with the processor to change the system configuration.

2. The system of claim 1, wherein said interface further comprises a first voice data buffer (241) for receiving voice signals from the processor (250) to be sent to the combiner (230) and a second voice data buffer (242) for receiving voice signals from the combiner (230) to be sent to the processor (250).

3. The system of claim 1, wherein said interface further comprises a control unit (243) for controlling the combiner (230) under the control of the processor (250).

4. The system of claim 1, wherein the selective combining and routing of telephone calls by combiner (230) under the control of the processor (250) comprises at least one: of routing calls from external phone lines (115) to selected handsets (120) or to voice buffers (241, 242) coupled to the processor (250); connecting selected handsets (120) to the processor (250) to retrieve voicemail stored in a RAM (251) of the interface; and merging multiple handsets (120) and/or phone lines (115) to provide conference calls.

5. The system of claim 1, wherein said interface (130) further comprises a RAM (251) for storing system configuration data received from the external computer (140).

6. The system of claim 1, wherein a given system configuration provided via said external computer (140) further specifies at least one of: which external phone line (115) is a main line and which are rollover lines; the extension numbers of each of the handsets (120); which handset (120) is in secretary mode; and which handsets (120) are added or deleted from the telephone system (100).

7. The system of claim 1, wherein the base transceiver establishes a time-division multiple access (TDMA) link over said RF channel with each handset via the handset transceiver in accordance with a TDMA time slot structure allocating exclusive audio packet time slots to each handset.

8. The system of claim 1, wherein the computer (140) further provides one or more features to the system (100), the system further comprising an external port (254) coupled to interface (130), the external port and the interface having a bandwidth sufficient to support the provided features.

9. The system of claim 1, further comprising a second interface for interfacing with a second wireless telephone system, under the control of the external computer (140) to expand overall system size.

10. A method for a base unit (110) of a wireless telephone system (100) having the base unit and a plurality of wireless handsets (120), the base unit comprising a base transceiver (111, 112), each handset (120) comprising a handset transceiver (121, 122), the method comprising the steps of:
(a) communicating over an RF channel with each handset via the base transceiver and the handset transceiver;
(b) interfacing with an external computer (140) via an interface (130) of the base unit; and
(c) controlling, with a processor (250), a phone call linear combiner (230) of the interface;
(d) selectively routing and teleconferencing telephone calls in the system, with the combiner (230), under the control of the processor (250) in accordance with a system configuration, said computer (140) communicating with the processor to change the system configuration for selected routing and teleconferencing the phone calls in the system; and
(e) communicating, with the computer (140), with the processor (250) when interfaced with the base unit via the interface to change the system configuration.

11. The method of claim 10, wherein said interface further comprises a first voice data buffer (241) for receiving voice signals from the processor (250) to be sent to the combiner (230) and a second voice data buffer (242) for receiving voice signals from the combiner (230) to be sent to the processor (250).

12. The method of claim 10, wherein said interface further comprises a control unit (243) for controlling the combiner (230) under the control of the processor (250).

13. The method of claim 10, wherein the selective combining and routing of telephone calls by combiner (230) under the control of the processor (250) comprises at least one of: routing calls from external phone lines (115) to selected handsets (120) or to voice buffers (241, 242) coupled to the processor (250); connecting selected handles (120) to the processor (250) to retrieve voicemail stored in a RAM (251) of the interface; and merging multiple handsets (120) and/or phone lines (115) to provide conference calls.

14. The method of claim 10, wherein said interface (130) further comprises a RAM (251) for storing system configuration data received from the external computer (140).

15. The method of claim 10, wherein a given system configuration provide via said external computer (140) further specifies at least one of: which external phone line (115) is a main line and which are rollover lines; the extension numbers of each of the handsets (120); which handset (120) is in secretary mode; and which handsets (120) are added or deleted from the telephone system (100).

16. The method of claim 10, wherein step (a) comprises the step of establishing, with the base transceiver, a TDMA link over the RF channel with each handset via the handset transceiver in accordance with a TDMA time slot structure allocating exclusive audio packet time slots to each handset.

17. The method of claim 10, wherein step (c) further comprises the step of providing one or more features to the system, the system further comprising an external port coupled to interface, the external port and the interface having a bandwidth sufficient to support the provided features.

18. The method of claim 10, comprising the further step of interfacing with a second wireless telephone system via a second interface, under the control of the computer (140), to increase the size of the system (100).

19. A base unit (110) of a wireless telephone system (100) comprising the base unit and a plurality of wireless handsets (120), each handset (120) comprising a handset transceiver (121, 122), the base unit (110) comprising:
(a) a base transceiver (111, 112) for communicating over an RF channel with each handset via its handset transceiver; and
(b) an interface (130) for interfacing with an external computer (140), **characterized in that** said interface comprises: a processor (250), and a phone call linear combiner (230) for selectively routing and teleconferencing telephone calls in the system under the control of the processor in accordance with a system configuration; said computer communicating with the processor to change the system configuration for selected routing and teleconferencing telephone calls in the system, wherein the computer, when interfaced with the base unit via the interface, can communicate with the processor to change the system configuration.

20. The base unit of claim 19, wherein said interface further comprises a first voice data buffer (241) for receiving voice signals from the processor (250) to be sent to the combiner (230) and a second voice data buffer (242) for receiving voice signals from the combiner (230) to be sent to the processor (250).

21. The base unit of claim 20, wherein said interface further comprises a control unit (243) for controlling the combiner (230) under the control of the processor (250).

22. The base unit of claim 20, wherein the selective combining and routing telephone calls by combiner (230) under the control of the processor (250) comprises at least one of : routing calls from external phone lines (115) to selected handsets (120) or to voice buffers (241, 242) coupled to the processor (250); connecting selected handsets (120) to the processor (250) to retrieve voicemail stored in a RAM (251) of the interface; and merging multiple handsets (120) and/or phone lines (115) to provide conference calls.

23. The base unit of claim 20, wherein said interface (130) further comprises a RAM (251) for storing system configuration data received from the external computer (140).

24. The base unit of claim 20, wherein a given system configuration provided via said external computer (140) further specifies at least one of: which external phone line (115) is a main line and which are rollover lines; the extension numbers of each of the handsets (120); which handset (120) is in secretary mode; and which handsets (120) are added or deleted from the telephone system (100).

25. The base unit of claim 20, further comprising a second interface for interfacing with a second wireless telephone system, under the control of a computer (140), to expand overall system size.

## Patentansprüche

1. Drahtloses Telefonsystem (100) mit:
(a) mehreren drahtlosen Handapparaten (120), wobei jeder Handapparat (120) einen Handapparat-Transceiver (121, 122) enthält, und
(b) einer Basiseinheit (110) mit einem Basis-Transceiver (111, 112) zur Kommunikation über einen HF-Kanal mit jedem Handapparat über dessen Handapparat-Transceiver, und einer Schnittstelle (130) zur Schnittstellenbildung mit einem externen Computer (140),
**dadurch gekennzeichnet, dass**
die Schnittstelle folgendes enthält: einen Prozessor (250) und einem linearen Telefongesprächkombinierer (230) zur selektiven Weiterleitung und für Telekonferenz-Telefongespräche in dem System unter Steuerung durch den Prozessor gemäß einer Systemkonfiguration, wobei der Computer (140) mit dem Prozessor kommuniziert, um die Systemkonfiguration für die gewählte Weiterleitung und die Telekonferenz-Telefongespräche in dem System zu ändern, und wobei der Computer, wenn er über eine Schnittstelle mit der Basiseinheit verbunden ist, mit dem Prozessor kommunizieren kann, um die Systemkonfiguration zu ändern.

2. System nach Anspruch 1, wobei die Schnittstelle außerdem einen ersten Sprachdatenpuffer (241) zum Empfang von Sprachsignalen von dem Prozessor (250) enthält, die zu dem Kombinierer (230) und einem zweiten Sprachdatenpuffer (242) zum Empfang von Sprachsignalen von dem Kombinierer (230) für die Lieferung zu dem Prozessor (250) gesendet werden sollen.

3. System nach Anspruch 1, wobei die Schnittstelle außerdem eine Steuereinheit (243) zur Steuerung des Kombinierers (230) unter Steuerung durch den Prozessor (250) enthält.

4. System nach Anspruch 1, wobei die selektive Kombinierung und Weiterleitung von Telefongesprächen durch den Kombinierer (230) unter Steuerung durch den Prozessor (250) wenigstens eines der folgenden Merkmale enthält: Gesprächsweiterleitung von externen Telefonleitungen (115) zu gewählten Handapparaten (120) oder zu mit dem Prozessor (250) verbundenen Sprachpuffern (241, 242), Verbindung der gewählten Handapparate (120) mit dem Prozessor (250) zur Rückgewinnung der in einem RAM (251) der Schnittstelle gespeicherten Sprachnachricht und Mischung der mehreren Handapparate (120) und/oder Telefonleitungen (115) zur Bildung der Konferenzgespräche.

5. System nach Anspruch 1, wobei die Schnittstelle (130) außerdem ein RAM (251) zur Speicherung der von dem externen Computer (140) empfangenen System-Konfigurationsdaten enthält.

6. System nach Anspruch 1, wobei eine bestimmte, durch den externen Computer (140) gebildete Systemkonfiguration außerdem wenigstens eines der folgenden Merkmale angibt: welche externe Telefonleitung (115) eine Hauptleitung und welche Rollover-Leitungen sind, die Durchwahlnummern jedes der Handapparate (120), welcher Handapparat (120) sich in einem Geheimmodus befindet, und welche Handapparate (120) dem Telefonsystem (100) hinzugefügt oder aus diesem entfernt werden.

7. System nach Anspruch 1, wobei der Basistransceiver eine Zeitmultiplex-Zugriffs (TDMA = time-division multiple access) -Verbindung über den HF-Kanal mit jedem Handapparat über den Handapparat-Transceiver gemäß einer TDMA-Zeitfensterstruktur bildet, die jedem Handapparat exklusive Audiopaket-Zeitfenster zuordnet.

8. System nach Anspruch 1, wobei der Computer (140) außerdem eines oder mehrere Merkmale zu dem System (100) liefert, das System außerdem einen mit der Schnittstelle (130) verbundenen externen Anschluss (254) enthält und der externe Anschluss und die Schnittstelle eine Bandbreite aufweisen, die für die gebildeten Merkmale ausreichend ist.

9. System nach Anspruch 1 mit einer zweiten Schnittstelle zur Schnittstellenbildung mit einem zweiten drahtlosen Telefonsystem unter Steuerung durch den externen Computer (140), um die Gesamtsystemgröße auszudehnen.

10. Verfahren für eine Basiseinheit (110) eines drahtlosen Telefonsystems (100) mit der Basiseinheit und mehreren drahtlosen Handapparaten (120), wobei die Basiseinheit einen Basis-Transceiver (111, 112), jeder Handapparat (120) einen Handapparat-Transceiver (121, 122) enthält, mit folgenden Schritten:
(a) Kommunikation mit jedem Handapparat über einen HF-Kanal durch den Basis-Transceiver und den Handapparat-Transceiver,
(b) Schnittstellenbildung mit einem externen Computer (140) über eine Schnittstelle (130) der Basiseinheit und
(c) Steuerung eines linearen Telefongesprächs-Kombinierers (230) der Schnittstelle mit einem Prozessor (250),
(d) selektives Routing und Telekonferenz -Telefongespräche in dem System mit dem Kombinierer (230) unter Steuerung durch den Prozessor (250) gemäß einer Systemkonfiguration, wobei der Computer (140) mit dem Prozessor kommunifiziert, um die Systemkonfiguration für das gewählte Routing und die Telekonferenzbildung der Telefongespräche in dem System zu ändern, und
(e) Kommunikation mit dem Computer (140), mit dem Prozessor (250), wenn er mit der Basiseinheit über die Schnittstelle verbunden ist, um die Systemkonfiguration zu ändern.

11. Verfahren nach Anspruch 10, wobei die Schnittstelle außerdem einen ersten Sprachdatenpuffer (241) zum Empfang der Sprachsignale von dem Prozessor (250) enthält, die zu dem Kombinierer (230) übertragen werden sollen, und einen zweiten Sprachdatenpuffer (242) zum Empfang der Sprachsignale von dem Kombinierer (230) enthält, die zu dem Prozessor (250) übertragen werden sollen.

12. Verfahren nach Anspruch 10, wobei die Schnittstelle außerdem eine Steuereinheit (243) zur Steuerung des Kombinierers (230) unter Steuerung durch den Prozessor (250) enthält.

13. Verfahren nach Anspruch 10, wobei die selektive Kombinierung und das Routing von Telefongesprächen durch den Kombinierer (230) unter Steuerung durch den Prozessor (250) wenigstens eines der folgenden Merkmale enthält: Routing der Gespräche von externen Telefonleitungen (115) zu gewählten Handapparaten (120) oder zu Sprachpuffern (241, 242), die mit dem Prozessor (250) verbunden sind, Verbindung gewählter Handapparate (120) mit dem Prozessor (250) zur Rückgewinnung von in einem RAM (251) der Schnittstelle gespeicherten Sprachnachrichten und Mischung der mehreren Handapparate (120) und/oder Telefonleitungen (115) zur Bildung der Konferenzgespräche.

14. Verfahren nach Anspruch 10, wobei die Schnittstelle (130) außerdem ein RAM (251) zur Speicherung der System-Konfigurationsdaten enthält, die von dem externen Computer (140) empfangen werden.

15. Verfahren nach Anspruch 10, wobei eine bestimmte Systemkonfiguration über den externen Computer (140) außerdem wenigstens eines der folgenden Merkmale angibt: welche externe Telefonleitung (151) eine Hauptleitung und welche Rollover-Leitungen sind, die Durchwahlnummern jedes der Handapparate (120), welche Handapparate (120) sich im Geheimmodus befinden und welche Handapparate (120) dem Telefonsystem (100) hinzugefügt oder aus diesem beseitigt werden.

16. Verfahren nach Anspruch 10, wobei der Schritt (a) den Schritt der Bildung mit dem Basis-Transceiver einer TDMA-Verbindung über den HF-Kanal mit jedem Handapparat über den Handapparat-Transceiver gemäß einer TDMA-Zeitsfensterstruktur erfolgt, die exklusive Audiopaket-Zeitfenster jedem Handapparat zuordnet.

17. Verfahren nach Anspruch 10, wobei der Schritt (c) außerdem den Schritt enthält, für das System ein oder mehrere Merkmale zu liefern, und das System außerdem einen externen Anschluss aufweist, der mit der Schnittstelle, dem externen Anschluss und der Schnittstelle verbunden ist, und eine Bandbreite aufweist, die für die gebildeten Merkmale ausreichend ist.

18. Verfahren nach Anspruch 10 mit dem Schritt der Schnittstellenbildung mit einem zweiten drahtlosen Telefonsystem über eine zweite Schnittstelle unter Steuerung durch den Computer (140), um die Größe des Systems (100) zu erhöhen.

19. Basiseinheit (110) eines drahtlosen Telefonsystems (100) mit der Basiseinheit und mehreren drahtlosen Handapparaten (120), wobei jeder Handapparat (120) einen Handapparat-Transceiver (121, 122) und die Basiseinheit (110) folgendes enthält:
(a) einen Basis-Transceiver (111, 112) zur Kommunikation über einen HF-Kanal mit jedem Handapparat über dessen Handapparat-Transceiver, und
(b) eine Schnittstelle (130) zur Schnittstellenbildung mit einem extern Computer (140), **dadurch gekennzeichnet, dass** die Schnittstelle folgende Merkmale enthält: einen Prozessor (250) und einen linearen Telefongesprächskombinierer (230) zum selektiven Routing und zur Telefonkonferenzbildung von Telefongesprächen in dem System unter Steuerung durch den Prozessor gemäß einer Systemkonfiguration, wobei der Computer mit dem Prozessor kommuniziert, um die Systemkonfiguration für ein gewähltes Routing und die Telekonferenzbildung durch Telefongespräche in dem System zu ändern, wobei der Computer, wenn er mit der Basiseinheit über die Schnittstelle verbunden ist, mit dem Prozessor kommunizieren kann, um die Systemkonfiguration zu ändern.

20. Basiseinheit nach Anspruch 19, wobei die Schnittstelle außerdem einen ersten Sprachdatenpuffer (241) zum Empfang von Sprachsignalen von dem Prozessor (250) enthält, die zu dem Kombinierer (230) übertragen werden sollen, und einen zweiten Sprachdatenpuffer (242) zum Empfang der Sprachsignale von dem Kombinierer (230) enthält, die zu dem Prozessor (250) übertragen werden sollen.

21. Basiseinheit nach Anspruch 20, wobei die Schnittstelle außerdem eine Steuereinheit (243) zur Steuerung des Kombinierers (230) unter Steuerung durch den Prozessor (250) enthält.

22. Basiseinheit nach Anspruch 20, wobei die selektive Kombinierung und das Routing der Telefongespräche durch den Kombinierer (230) unter Steuerung durch den Prozessor (250) wenigstens eines der folgenden Merkmale enthält: Routing der Gespräche von den externen Telefonleitungen (115) zu den gewählten Handapparaten (120) oder zu den Sprachpuffern (241, 242), die mit dem Prozessor (250) verbunden sind, Verbindung der gewählten Handapparate (120) mit dem Prozessor (250) zur Rückgewinnung der in einem RAM (251) der Schnittstelle gespeicherten Sprachnachricht, und Mischung der mehreren Handapparate (120) und/oder der Telefonleitungen (115) zur Bildung der Konferenzgespräche.

23. Basiseinheit nach Anspruch 20, wobei die Schnittstelle (130) außerdem ein RAM (251) zur Speicherung der Systemkonfigurationsdaten enthält, die von dem externen Computer (140) empfangen werden.

24. Basiseinheit nach Anspruch 20, wobei eine bestimmte, über den externen Computer (140) gelieferte Systemkonfiguration außerdem wenigstens eines der folgenden Merkmale angibt: welche externe Telefonleitung (115) eine Hauptleitung und welche Rollover-Leitungen sind, die Durchwahlnummern jedes der Handapparate (120), welcher Handapparat (120) sich im Geheimmodus befindet und welche Handapparate (120) dem Telfonsystem (100) hinzugefügt oder aus diesem beseitigt sind.

25. Basiseinheit nach Anspruch 20 mit einer zweiten Schnittstelle zur Schnittstellenbildung mit einem zweiten drahtlosen Telefonsystem unter Steuerung durch einen Computer (140), um die Gesamtsystemgröße auszudehnen.

## Revendications

1. Un système de téléphonie sans fil (100) comprenant :
(a) plusieurs combinés sans fil (120), chaque combiné (120) comprenant un combiné émetteur-récepteur (121, 122) ; et
(b) une base (110) comprenant un émetteur-récepteur de base (111, 112) pour assurer la communication sur un canal RF avec chaque combiné au moyen de son combiné émetteur-récepteur et ; une interface (130) assurant l'interface avec un ordinateur externe (140), **caractérisé en ce que** ladite interface comprend : un processeur (250) et un combineur linéaire d'appels téléphoniques (230) pour assurer le routage et la mise en téléconférence des appels téléphoniques de façon sélective dans le réseau sous le contrôle du processeur conformément à une configuration du réseau, ledit ordinateur (140) communiquant avec le processeur pour modifier la configuration du réseau pour les appels téléphoniques sélectionnés mis en téléconférence et routés dans le réseau, dans lequel l'ordinateur, lorsqu'il est mis en interface avec la base via l'interface, peut communiquer avec le processeur pour modifier la configuration du réseau.

2. Le système de la revendication 1, dans lequel ladite interface comprend en outre un premier tampon de données vocales (241) pour recevoir les signaux vocaux du processeur (250) à envoyer au combineur (230) et un deuxième tampon de données vocales (242) pour recevoir les signaux vocaux du combineur (230) à envoyer au processeur (250).

3. Le système de la revendication 1, dans lequel ladite interface comprend en outre une unité de commande (243) pour commander le combineur (230) sous le contrôle du processeur (250).

4. Le système de la revendication 1, dans lequel la combinaison et le routage sélectif des appels téléphoniques par le combineur (230) sous le contrôle du processeur (250) comprend au moins l'une des fonctions suivantes : routage des appels à partir des lignes téléphoniques externes (115) vers les combinés sélectionnés (120) ou vers les tampons de données vocales (241, 242) couplés au processeur (250), connexion des combinés (120) sélectionnés au processeur (250) pour extraire la messagerie vocale stockée dans une mémoire (251) de l'interface, et fusion de plusieurs combinés (120) et/ou de lignes téléphoniques (115) pour fournir des appels de conférence.

5. Le système de la revendication 1, dans lequel ladite interface (130) comprend également une mémoire (251) pour stocker les données de configuration du réseau reçues de l'ordinateur externe (140).

6. Le système de la revendication 1, dans lequel une configuration donnée du système et fournie via ledit ordinateur personnel externe (140) spécifie en outre au moins quelle ligne téléphonique externe (115) est une ligne principale et quelles lignes sont des lignes de substitution, les numéros d'extension de chaque combiné (120), le combiné défini en mode de secrétariat, et les combinés (120) ajoutés ou retirés du réseau de téléphonie (100).

7. Le système de la revendication 1, dans lequel l'émetteur-récepteur de base établit une liaison d'accès multiple à répartition temporelle (TDMA) sur ledit canal RF avec chaque combiné via le combiné émetteur-récepteur conformément à une structure d'intervalle de temps AMRT allouant des intervalles de temps de paquets audio exclusifs à chaque combiné.

8. Le système de la revendication 1, dans lequel l'ordinateur (140) fournit en outre une ou plusieurs fonction(s) au réseau (100), le réseau comprenant également un port externe (254) couplé à une interface (130), le port externe et l'interface disposant d'une bande passante suffisante pour prendre en charge les fonctions fournies.

9. Le système de la revendication 1, comprenant en outre une deuxième interface qui sert d'interface avec un deuxième système de téléphonie sans fil, sous le contrôle de l'ordinateur externe (140) pour étendre la taille du système.

10. Une méthode pour la base (110) d'un système de téléphonie sans fil (100) possédant une base et plusieurs combinés sans fil (120), la base comprenant un émetteur-récepteur de base (111, 112), chaque combiné (120) comprenant un combiné émetteur-récepteur (121, 122), la méthode comprenant les étapes suivantes :
(a) communication sur un canal RF avec chaque combiné via l'émetteur-récepteur de base et le combiné émetteur-récepteur ;
(b) mise en interface avec un ordinateur externe (140) via une interface (130) de la base ; et
(c) contrôle, à l'aide d'un processeur (250), d'un combineur linéaire d'appels téléphoniques (230) de l'interface ;
(d) routage et mise en téléconférence sélectifs des appels téléphoniques dans le système avec le combineur (230), sous le contrôle du processeur (250) conformément à une configuration du système, ledit ordinateur (140) communiquant avec le processeur pour modifier la configuration du système pour router et mettre en téléconférence les appels téléphoniques sélectionnés dans le système; et
(e) communication avec l'ordinateur (140), avec le processeur (250) lorsqu'il est mis en interface avec la base via l'interface pour modifier la configuration du système.

11. La méthode de la revendication 10, dans laquelle ladite interface comprend en outre un premier tampon de données vocales (241) pour recevoir des signaux vocaux du processeur (250) à envoyer au combineur (230) et un deuxième tampon de données vocales (242) pour recevoir des signaux vocaux du combineur (230) à envoyer au processeur (250).

12. La méthode de la revendication 10, dans laquelle ladite interface comprend en outre une unité de commande (243) pour commander le combineur (230) sous le contrôle du processeur (250).

13. La méthode de la revendication 10, dans laquelle la combinaison et le routage sélectifs des appels téléphoniques par le combineur (230) sous le contrôle du processeur (250) comprend au moins l'une des fonctions suivantes : routage des appels à partir des lignes téléphoniques externes (115) vers les combinés sélectionnés (120) ou vers les tampons de données vocales (241, 242) couplés au processeur (250), connexion des combinés (120) sélectionnés au processeur (250) pour extraire la messagerie vocale stockée dans une mémoire (251) de l'interface, et fusion de plusieurs combinés (120) et/ou de lignes téléphoniques (115) pour fournir des appels de conférence.

14. La méthode de la revendication 10, dans laquelle ladite interface (130) comprend également une mémoire (251) pour stocker les données de configuration du système reçues de l'ordinateur exteme (140).

15. La méthode de la revendication 10, dans laquelle une configuration donnée du système et fournie via ledit ordinateur personnel externe (140) spécifie en outre au moins quelle ligne téléphonique externe (115) est une ligne principale et quelles lignes sont des lignes de substitution, les numéros d'extension de chaque combiné (120), le combiné défini en mode de secrétariat et les combinés (120) ajoutés ou retirés du système de téléphonie (100).

16. La méthode de la revendication 10, dans laquelle l'étape (a) comprend l'étape d'établissement, avec l'émetteur-récepteur de base, d'une liaison d'accès multiple à répartition temporelle (TDMA) sur le canal RF avec chaque combiné via le combiné émetteur-récepteur conformément à une structure d'intervalle de temps TDMA allouant des intervalles de temps de paquets audio exclusifs à chaque combiné.

17. La méthode de la revendication 10, dans laquelle l'étape (c) comprend en outre l'étape de mise à disposition d'une ou de plusieurs fonctions au système, le système comprenant également un port externe couplé à une interface, le port externe et l'interface disposant d'une bande passante suffisante pour prendre en charge les fonctions foumies.

18. La méthode de la revendication 10, comprenant en outre une étape supplémentaire de mise en interface avec un deuxième système de téléphonie sans fil, sous le contrôle de l'ordinateur (140) pour étendre la taille du système (100).

19. Une base (110) d'un système de téléphonie sans fil (100) comprenant une base et plusieurs combinés sans fil (120), chaque combiné comprenant un combiné émetteur-récepteur (121, 122), la base comprenant :
(a) une base d'émission/réception (111, 112) pour établir une communication sur un canal RF avec chaque combiné via son combiné émetteur-récepteur, et
(b) une interface (130) assurant d'interface avec un ordinateur personnel externe (140) caractériséee en ce que ladite interface comprend : un processeur (250) et un combineur linéaire d'appels téléphoniques (230) pour router et mettre en téléconférence de façon sélective les appels téléphoniques dans le système sous le contrôle du processeur conformément à une configuration du système, ledit ordinateur communiquant avec le processeur pour modifier la configuration du système pour le routage et la mise en téléconférence des appels téléphoniques sélectionnés dans le système, où l'ordinateur, lorsqu'il est mis en interface avec la base via l'interface, peut communiquer avec le processeur pour modifier la configuration du système.

20. La base de la revendication 19, dans laquelle ladite interface comprend en outre un premier tampon de données vocales (241) pour recevoir des signaux vocaux du processeur (250) à envoyer au combineur (230) et un deuxième tampon de données vocales (242) pour recevoir les signaux vocaux du combineur (230) à envoyer au processeur (250).

21. La base de la revendication 20, dans laquelle ladite interface comprend en outre une unité de commande (243) pour commander le combineur (230) sous le contrôle du processeur (250).

22. La base de la revendication 20, dans laquelle la combinaison et le routage sélectif des appels téléphoniques par le combineur (230) sous le contrôle du processeur (250) comprennent au moins l'une des fonctions suivantes : routage des appels à partir des lignes téléphoniques externes (115) vers les combinés sélectionnés (120) ou vers les tampons de données vocales (241, 242) couplés au processeur (250), connexion des combinés (120) sélectionnés au processeur (250) pour extraire la messagerie vocale stockée dans une mémoire (251) de l'interface, et fusion de plusieurs combinés (120) et/ou de lignes téléphoniques (115) pour fournir des appels de conférence.

23. La base de la revendication 20, dans laquelle ladite interface (130) comprend également une mémoire (251) pour stocker des données de configuration du système reçues de l'ordinateur externe (140).

24. La base de la revendication 20, dans lequel une configuration donnée du système et fournie via ledit ordinateur personnel externe (140) spécifie en outre au moins quelle ligne téléphonique externe (115) est une ligne principale et quelles lignes sont des lignes de substitution, les numéros d'extension de chaque combiné (120), le combiné défini en mode de secrétariat et les combinés ajoutés ou retirés du système de téléphonie (100).

25. La base de la revendication 20, comprenant en outre une deuxième interface permettant la mise en interface avec un deuxième système de téléphonie sans fil, sous le contrôle d'un ordinateur (140) pour étendre la taille du système (100).
